# EUROPÄISCHE PATENTSCHRIFT

(11) **EP 0 702 040 B1**
(45) Veröffentlichungstag und Bekanntmachung des Hinweises auf die Patenterteilung: **29.03.2000**
(21) Anmeldenummer: 95113985.6
(22) Anmeldetag: 06.09.1995
(51) Int. Cl.: C08G 18/67, C08G 18/81, C08G 18/68, C09D 175/16, C09D 5/03

(54) **Ungesättigte Polyesterurethanacrylate als Bindemittel für Pulverlacke**
Unsaturated polyesterurethane-acrylates as a binder for powder coatings
Polyesteruréthane-acrylates comme liant pour peintures en poudre

(30) Priorität: 14.09.1994 DE 4432644
(43) Veröffentlichungstag der Anmeldung: 20.03.1996
(73) Patentinhaber: HOECHST AKTIENGESELLSCHAFT, 65926 Frankfurt am Main (DE)
(72) Erfinder: Brindöpke, Gerhard, Dr., D-65843 Sulzbach (DE); Fink, Dietmar, D-65232 Taunusstein (DE)
(74) Vertreter: Zounek, Nikolai, Dipl.-Ing.

(56) Entgegenhaltungen:
- EP-A- 0 410 242
- DE-A- 4 228 514
- FR-A- 2 695 935
- GB-A- 1 234 684

## Beschreibung

Aus EP-A-0 410 242 sind Polyurethane mit einem Gehalt an (Meth)acryloylgruppen bekannt, die durch Umsetzung von
A) 40 bis 80 Teilen eines organischen Polyisocyanats mit
B) 15 bis 50 Teilen eines (Meth)acryloylgruppen-aufweisenden einwertigen Alkohols und
C) 2 bis 20 Teilen einer weiteren Aufbaukomponente, bestehend aus mindestens einer (Meth)acryloylgruppen-freien Verbindung mit gegenüber Isocyanatgruppen reaktionsfähigen Gruppen hergestellt werden.

Diese Polyurethane dienen als Bindemittel in Pulverlacken. Die Blockstabilität dieser Lacke ist jedoch in vielen Fällen nicht ausreichend. In der EP-A 0 585 742 wird beschrieben, daß die Blockstabilität von Lacken auf Basis dieser Polyurethane verbessert werden kann, wenn man sie mit festen, ungesättigten Polyestern abmischt. Diese Polyester sind billiger als die genannten Polyurethane, daher ergibt sich durch Ersatz eines Teils der Polyurethane durch die ungesättigten Polyester insgesamt eine Verbilligung für die Pulverlacke.

Mit solchen Pulverlacken lassen sich auch temperaturempfindliche Substrate beschichten, wie Holz, Holzwerkstoffe und Kunststoffe, da sie durch UV-Bestrahlung oder durch Zusatz von Peroxiden schon bei niedrigen Temperaturen aushärten.

Für die Anwendung ist es wünschenswert, daß diese Pulverlacke bei dieser erniedrigten Einbrenntemperatur ebenso gut verlaufen und ebenso glatte Oberflächen liefern wie herkömmliche Pulverlacke. Die Bindemittel müssen daher schon bei möglichst niedrigen Verarbeitungstemperaturen gut verlaufen. Häufig werden zu solch einem Zweck Verlaufsadditive zugesetzt, die die Schmelzviskosität des Bindemittels deutlich herabsetzen. Diese Produkte reagieren jedoch bei der Härtung nicht mit. Dies verschlechtert die Beständigkeit des Lackes gegenüber Chemikalien.

In der gleichzeitig eingereichten Patentanmeldung P 44 32 645.9 wird diese Aufgabe durch Zusatz von reaktiven festen Verlaufsmitteln gelöst.

Die Senkung der Schmelzviskosität ist bei Pulverlacken nicht beliebig weit möglich, da häufig gleichzeitig die Schmelztemperatur abnimmt. Die so formulierten Pulverlacke beginnen bei der Lagerung zu agglomerieren; der Pulverlack ist dann nicht mehr verarbeitbar.

Aufgabe der Erfindung war es nun, solche Bindemittel für Pulverlacke bereitzustellen, die durch UV-Bestrahlung oder durch Zusatz von Peroxiden härtbar sind und die weiter verbesserte Verlaufseigenschaften aufweisen, ohne daß die daraus formulierten Pulverlacke ihre Lagerstabilität verlieren.

Es wurde nun gefunden, daß feste ungesättigte Polyesterurethanacrylate bereits bei niedrigen Temperaturen zu glatten Filmen verlaufen, ohne daß bei der Lagerung Probleme durch Agglomeration auftreten.

Aus der FR-A 2 695 935 waren Formmassen bekannt, die neben gemahlenen Mineralien und Kurzglasfasern ein äthylenisch ungesättigtes Monomer und ein härtbares Polymer enthalten, wobei dies durch Reaktion eines ungesättigten Polyesters, eines Polyisocyanats und eines Hydroxylgruppenhaltigen (Alk)Acrylates zugänglich ist.

Gegenstand der Erfindung ist die Verwendung von festen, ungesättigten Polyesterurethanacrylaten mit einer Schmelztemperatur von 35 bis 180 °C als Bindemittel für Pulverlacke, wobei die Polyesterurethanacrylate herstellbar sind durch Umsetzung von einem Polyisocyanat B, einem Hydroxyalkyl-(meth)acrylat C und einem hydroxylgruppenhaltigen, ungesättigten Polyester A, erhältlich durch Kondensation von ungesättigten Dicarbonsäuren, deren Anhydriden, oder einer Mischung von Säuren und Anhydriden, gegebenenfalls zusammen mit gesättigten Carbonsäuren, und mehrwertigen Alkoholen oder Glycidylverbindungen.

Unter "Acrylverbindungen" und "Acrylaten" werden im folgenden stets auch die entsprechenden Methacrylverbindungen mit verstanden.

Für die Erfindung sind ungesättigte, hydroxylgruppenhaltige Polyester A geeignet, die als funktionelle Gruppen überwiegend Hydroxylgruppen und daneben Carboxylgruppen enthalten; der Gehalt an Hydroxylgruppen entspricht OH-Zahlen zwischen 10 und 200 mg KOH/g, insbesondere zwischen 20 und 150 mg KOH/g. Im Mittel sollte jedes Polyestermolekül mindestens eine Hydroxylgruppe besitzen. Die Säurezahlen der Polyester liegen zwischen 2 und 60, vorzugsweise zwischen 2 und 30 mg KOH/g.

Die Viskosität der Polyester A, gemessen in der Schmelze bei 200 °C, ist geringer als 100 000 m·Pas, bevorzugt geringer als 40 000 m·Pas.

Die ungesättigten, hydroxylgruppenhaltigen festen Polyester A werden hergestellt durch die an sich bekannte Kondensation von mehrwertigen Alkoholen und ungesättigten Dicarbonsäuren, deren Anhydriden oder einem Gemisch aus Säuren und Anhydriden, gegebenenfalls zusätzlich gesättigten Carbonsäuren. Gegebenenfalls können auch Ester dieser Carbonsäuren mit Alkoholen eingesetzt werden, die unter den Kondensationsbedingungen flüchtig sind (z.B. Methylester), oder Halbester von mehrwertigen Alkoholen (z.B. Glykolester). Der Massengehalt an (olefinisch ungesättigten) Alken-Gruppen (berechnet als -C=C-Gruppe) im Polyester A soll 2 bis 20, vorzugsweise 2 bis 15, insbesondere 2 bis 10 % betragen.

Als ungesättigte Dicarbonsäuren kommen insbesondere in Frage Maleinsäure, Citraconsäure, Itaconsäure sowie deren Anhydride, Fumarsäure und Mesaconsäure.

Die gesättigten Carbonsäuren können aliphatische, cycloaliphatische, aromatische und/oder heterocyclische Mono-, Di- oder Polycarbonsäuren sein und gegebenenfalls, z.B. durch Halogenatome, substituiert sein. Bevorzugt werden Dicarbonsäuren bzw. deren Anhydride. Als Beispiele hierfür seien genannt: Dicarbonsäuren wie Bernsteinsäure, Adipinsäure, Korksäure, Azelainsäure, Sebacinsäure, Phthalsäure, Terephthalsäure, Isophthalsäure, Tetrahydrophthalsäure, Hexahydrophthalsäure, Di- und Tetrachlorphthalsäure, Endomethylentetrahydrophthalsäure und ihr Hexachlorderivat, Glutarsäure, Terephthalsäuredimethylester, Terephthalsäure-bis-glykolester; Monocarbonsäuren wie Dimethylolpropionsäure, Benzoesäure, p-tert.-Butylbenzoesäure oder Hexahydrobenzoesäure; Polycarbonsäuren wie Trimellithsäure und Pyromellithsäure; weiterhin dimere und trimere Fettsäuren, z.B abgeleitet von Ölsäure, gegebenenfalls in Mischung mit monomeren Fettsäuren.

Als mehrwertige Alkohole sind Diole, Triole und Polyole mit vier und mehr Hydroxylgruppen geeignet, sie können aliphatisch linear oder verzweigt, oder gemischt aromatisch/aliphatisch sein. Bevorzugt werden Äthylenglykol, Propylenglykol-(1,2) und -(1,3), Butylenglykol-(1,4)- und -(2,3), Butendiol-(1,4), Di-β-hydroxyäthylbutandiol, Hexandiol-(1,6), Octandiol-(1,8), Neopentylglykol, 2,2-Bis-(4-(β-hydroxyäthoxy)-phenyl)-propan, 2-Methyl-1,3-propandiol, Xylylenglykol und die Polyole Glycerin, Trimethylolpropan, Hexantriol-(1,2,6), Butantriol-(1,2,4), Tris-(β-hydroxyäthyl)-isocyanurat, Trimethyloläthan, Pentaerythrit, Chinit, Mannit und Sorbit, Formose und deren Hydroxyalkylierungsprodukte, Methylglykoside, ferner die Oligo- und Polyoxyalkylenglykole wie Diäthylenglykol, Triäthylenglykol, Tetraäthylenglykol, Polyäthylenglykole, Dipropylenglykol, Tripropylenglykol, Polypropylenglykole, Dibutylenglykol, äth- oder propoxyliertes Butendiol und Polybutylenglykole in Frage. Auch Mono- und Polyester aus Lactonen, z.B. ε-Caprolacton oder Hydroxycarbonsäuren, wie z.B. Hydroxypivalinsäure, ω-Hydroxydecansäure, ε-Hydroxycapronsäure können eingesetzt werden; Polyester aus den oben genannten Polycarbonsäuren bzw. deren Derivate und Polyphenolen, wie Hydrochinon, Bisphenol-A, 4,4'-Dihydroxybiphenyl oder Bis-(4-hydroxyphenyl)-sulfon; mit Fettsäuren modifizierte Polyester (Ölalkyde) sowie natürlich vorkommende gesättigte oder ungesättigte Polyester, ihre Abbauprodukte oder Umesterungsprodukte mit Polyolen, wie Rizinusöl, Tallöl, Sojaöl, Leinöl; Polyester der Kohlensäure, die aus Hydrochinon, Diphenylolpropan, p-Xylylenglykol, Äthylenglykol, Butandiol oder Hexandiol-1,6 und andere Polyolen durch übliche Kondensationsreaktionen, z.B. mit Phosgen oder Diäthyl- bzw. Diphenylcarbonat, oder aus cyclischen Carbonaten, wie Glykolcarbonat oder Vinylidencarbonat, durch Polymerisation in bekannter Weise erhältlich sind.

Geeignete Polyester A sind z.B. auch die Reaktionsprodukte von Dicarbonsäuren und Glycidylverbindungen, wie sie z.B. in der DE-OS 24 10 513 beschrieben sind. Beispiele für Glycidylverbindungen, die hierfür verwendet werden können, sind Ester des 2,3-Epoxy-1-propanols mit monobasischen Säuren, die 4 bis 18 Kohlenstoffatome haben, wie Glycidylpalmitat, Glycidyllaurat und Glycidylstearat oder der Glycidylester eines Gemisches von Neononan-, -decan- und -undecansäure, der im Handel unter dem Namen ®Cardura E10 (Shell Chemicals) erhältlich ist; Alkylenoxide mit 4 bis 18 Kohlenstoffatomen wie Butylenoxid und Glycidyläther, wie Octylenglycidyläther. Als Dicarbonsäuren können hier sämtliche der oben aufgeführten Dicarbonsäuren verwendet werden.

Bevorzugte Komponenten sind auch monomere Ester, z.B. Dicarbonsäure-bis(hydroxyalkyl)ester, Monocarbonsäureester von mehr als 2-wertigen Polyolen und Oligoester, die durch Kondensationsreaktionen aus in der Lackchemie üblichen Rohstoffen hergestellt werden können.

Die ungesättigten hydroxylgruppenhaltigen Polyester A können auf an sich bekannte Weise durch Kondensation in einer Inertgasatmosphäre bei Temperaturen von 100 bis 260 °C, vorzugsweise 130 bis 240 °C, in der Schmelze oder in azeotroper Fahrweise gewonnen werden, wie es z.B. in Methoden der Organischen Chemie (Houben-Weyl), Bd. 14/2, Seiten 1 bis 5, 21 bis 23, und 40 bis 44, Georg Thieme Verlag, Stuttgart, 1963 oder bei C.R. Martens, Alkyd Resins, Seiten 51 bis 59, Reinhold Plastics Appl. Series, Reinhold Publishing Comp., New York, 1961, beschrieben ist.

Für die Umsetzung mit diesem hydroxylgruppenhaltigen, ungesättigten Polyester A geeignete Polyisocyanate B sind beliebige, aus der Polyurethanchemie bekannte, organische Polyisocyanate mit aliphatisch, cycloaliphatisch und/oder aromatisch gebundenen Isocyanatgruppen, die vorzugsweise eine Molmasse von 150 bis 1.500, vorzugsweise 168 bis 800 g/mol aufweisen. Geeignet sind beispielsweise 1-lsocyanato-3,3,5-trimethyl-5-isocyanatomethyl-cyclohexan (Isophorondiisocyanat, IPDI), Tetramethylxylylendiisocyanat (TMXDI), Hexamethylendiisocyanat (HDI), Trimethylhexamethylendiisocyanat, 4,4'-Diisocyanatodicyclohexylmethan, 4,4'-Diisocyanatodiphenylmethan, dessen technische Gemische mit 2,4-Diisocyanatodiphenylmethan und gegebenenfalls den höheren Homologen dieser Diisocyanate, 2,4-Diisocyanatotoluol und dessen technische Gemische mit 2,6-Diisocyanatotoluol, sowie Copolymerisate von α,α'-Dimethyl-metaisopropenylbenzylisocyanat (TMI).

Ebenfalls geeignet sind Biuret-, Isocyanurat-, Urethan- oder Harnstoff-modifizierte Polyisocyanate auf Basis dieser einfachen Polyisocyanate, sowie die dimeren Uretdione und trimeren Isocyanurate. Diese Derivate weisen im allgemeinen eine Molmasse bis ca. 1000 g/mol auf. Die Herstellung derartiger Derivate ist beispielsweise in US-PS 3,124,605, US-PS 3,183,112, US-PS 3,919,218 oder US-PS 4,324,879 beschrieben.

Bevorzugt werden als Komponente B 2,4-Diisocyanatotoluol oder dessen technische Gemische mit bis zu 35 %, bezogen auf die Masse des Gemischs, an 2,6-Di-isocyanatotoluol, IPDI, TMXDI und/oder durch Di- oder Trimerisierung von IPDI, TMXDI oder HDI erhaltene Polyisocyanate verwendet.

Das für die Umsetzung mit dem Polyisocyanat B und dem ungesättigten hydroxylgruppenhaltige Polyester A geeignete Hydroxyalkyl(meth-)acrylat C besteht aus mindestens einem (Meth)Acryloylgruppen aufweisenden, ein- oder mehrwertigen Alkohol. Hierunter sind insbesondere Hydroxyalkylester der Acrylsäure oder Methacrylsäure mit vorzugsweise 2-4 Kohlenstoffatomen im Hydroxyalkylrest wie Hydroxyäthyl(meth)acrylat, 2- und 3-Hydroxypropyl(meth)acrylat, 2-, 3- und 4-Hydroxybutyl(meth)acrylat zu verstehen. Es können aber auch Umsetzungsprodukte dieser Hydroxyalkylacrylate mit ∈-Caprolacton mitverwendet werden.

Daneben können aber auch Umsetzungsprodukte von Acrylsäure mit Di- oder Polyepoxiden, wie z.B. die Diglycidyläther des Bisphenol-A oder F, des Hexandiols, Butandiols oder Neopentylglykols sowie des Cyclohexandimethanol mitverwendet werden. Diese Produkte wirken dann kettenverlängernd. Ferner eignen sich Trimethylolpropandiacrylat oder Pentaerythrittriacrylat.

Bei der Herstellung des erfindungsgemäßen Bindemittels aus dem hydroxylgruppenhaltigen Polyester A, dem Polyisocyanat B und dem Hydroxyalkylacrylat C können zur Erzielung gewünschter Eigenschaften in untergeordneten Mengen gegenüber Isocyanatgruppen reaktive Komponenten, z. B. Triole wie Glycerin oder Trimethylolpropan, oder Polyamine mitverwendet werden. Geeignete Polyamine sind aliphatische lineare oder verzweigte oder cycloaliphatische Diamine oder Polyalkylenpolyamine z.B. Äthylendiamin, Propylendiamin, 2-Methylpentamethylendiamin, Hexamethylendiamin, Trimethylhexamethylendiamin, Neopentyldiamin, Octamethylendiamin, oder Triacetondiamin sowie oligomere Polyäthylenimine wie Diäthylentriamin, Triäthylentetramin.

Die Herstellung der festen ungesättigten Polyesterurethanacrylate erfolgt durch Umsetzung der genannten Ausgangskomponenten in der Schmelze oder in inerten Lösungsmitteln, wie beispielsweise Aceton, Äthylacetat, Butylacetat oder Toluol, wobei vorzugsweise Reaktionstemperaturen von 20 bis 150 °C, insbesondere 20 bis 140 °C eingehalten werden. Vorzugsweise wird so vorgegangen, daß zunächst in einem ersten Reaktionsschritt der ungesättigte, hydroxylgruppenhaltige Polyester A hergestellt wird und daß nach Verdünnung mit dem Hydroxyacrylat C die Isocyanatkomponente B zugesetzt wird. Man kann aber auch das Hydroxyalkylacrylat C zuerst mit der Isocyanatkomponente reagieren lassen, wobei (Meth)acryloylgruppenhaltige Urethane mit Isocyanatendgruppen entstehen. Diese werden dann in einem zweiten Schritt mit dem ungesättigten Polyester umgesetzt.

Man läßt die Umsetzung in der Regel bis zu einem Gehalt an freiem Isocyanat von unter 0,3 % laufen und isoliert dann das Produkt, wenn in Lösung gearbeitet wurde, durch Abdestillieren des Lösungsmittels bzw. wenn in der Schmelze gearbeitet wurde, durch Erstarrenlassen der Schmelze.

Auch hat es sich als vorteilhaft erwiesen, bei der Herstellung wie in der parallel eingereichten Anmeldung P 44 32 645.9 (Hoe 94 K/050) feste, reaktive Mono- oder Diacrylate als feste Lösungsmittel mitzuverwenden, da dadurch die Herstellbarkeit verbessert und die Viskosität des Produktes weiter gesenkt werden kann.

Die zum festen ungesättigten Polyesterurethanacrylat führende Additionsreaktion kann in an sich bekannter Weise mittels geeigneter Katalysatoren wie beispielsweise Zinnoctoat, Dibutylzinndilaurat oder tertiären Aminen wie Dimethylbenzylamin beschleunigt werden. Das als Umsetzungsprodukt anfallende ungesättigte Polyesterurethan kann andererseits durch Zugabe geeigneter Inhibitoren und Antioxidantien, wie beispielsweise substituierter Phenole und/oder Hydrochinone in Mengen von jeweils 0,001 bis 0,3 %, bezogen auf die Masse des Polyurethans, vor vorzeitiger und unerwünschter Polymerisation geschützt werden. Der Zusatz dieser Hilfsmittel kann vor, gleichzeitig und/oder im Anschluß an die zum Polyurethan führende Umsetzung erfolgen.

Diese festen ungesättigten Polyesterurethanacrylate haben einen Schmelzpunkt im Temperaturbereich von 35 bis 180 °C und haben einen Massengehalt an olefinischen Doppelbindungen in Form von (Meth)Acryloylgruppen (berechnet als -C=C-, Molmasse = 24 g/mol) von 0,5 bis 8 %.

Die Herstellung dieser Polyesterurethanacrylate erfolgt durch Umsetzung der obengenannten Ausgangskomponenten und nach dem obengenannten Verfahren, wobei Art- und Mengenverhältnisse dieser Ausgangskomponenten vorzugsweise so gewählt werden, daß praktisch isocyanatgruppenfreie ungesättigte Polyesterurethanacrylate mit einer zahlenmittleren Molmasse von 400 bis 20.000 g/mol resultieren.

Die auf diese Weise erhaltenen festen, (Meth)Acryloylgruppen aufweisenden ungesättigten Polyesterurethanacrylate ergeben wertvolle Bindemittel für Pulverlacke. Sie können ohne weitere Zusätze als hitze- oder als strahlenvernetzbare Pulverklarlacke verarbeitet werden (in welchem Falle das Bindemittel mit dem Überzugsmittel identisch wäre) oder vorzugsweise jedoch gemeinsam mit den aus der Lacktechnologie üblichen Hilfs- und Zusatzmitteln, Pigmenten, wie z.B. Titandioxid, zusätzlichen Verlaufsmitteln, wie z.B. Polybutylacrylat oder Siliconen und anderen Zusatzstoffen. Diese Mischungen werden auf Extrudern oder Knetern bei Temperaturen von ca. 70 bis 140, vorzugsweise 80 bis 120 °C, homogenisiert und anschließend durch Abkühlen verfestigt. Der hierbei anfallende Feststoff wird dann in an sich bekannter Weise gemahlen und durch Sieben von groben Kornanteilen, vorzugsweise zumindest von solchen mit einer oberhalb 0,1 mm liegenden Korngröße befreit.

Die so hergestellten pulverförmigen Überzugsmittel können nach üblichen Pulverauftragsverfahren, wie z.B. elektrostatischem Pulversprühen oder Wirbelsintern, auf die zu überziehenden Formteile aufgebracht werden. Im Falle von Holz als Substrat kann z.B. vor dem elektrostatischen Versprühen noch ein Leitfähigkeitshilfsmittel aufgebracht werden. Im allgemeinen eignen sich diese Bindemittel sowohl für die Kalt- und Heißbeschichtung; im Falle von großflächigen Substraten wie z.B. Holz-, oder Metallplatten oder Papierbahnen ist auch eine vertikale Beschichtung möglich, ohne daß es zu einem Zusammenbacken des Pulvers kommt. Bei diesem Verfahren kann unter Umständen auch auf ein elektrostatisches Versprühen verzichtet werden. Die erfindungsgemäßen Überzugsmassen können zum Lackieren von Substraten, wie Holz, Glas, Metall, Papier oder Kunststoff verwendet werden.

Die Aushärtung der Überzüge erfolgt entweder, wenn dem Pulverlack ein Radikalkettenstarter z. B. ein organisches Peroxid zugesetzt worden ist, durch Erhitzen auf Temperaturen von 90 bis 220 °C, vorzugsweise 120 bis 190 °C, oder durch die Einwirkung von energiereicher Strahlung wie UV- oder Elektronenstrahlen.

Im Fall der thermischen Vernetzung wird zur Beschleunigung der Härtungsreaktion bevorzugt ein Radikalkettenstarter zugesetzt, also eine Verbindung, die bei höherer Temperatur durch Zerfall Radikale bildet. Diese Radikale starten die Polymerisationsreaktion. Geeignete Verbindungen sind solche, die üblicherweise zur thermisch induzierten Polymerisation von Vinylverbindungen wie Styrol oder Acrylpolymeren eingesetzt werden, beispielsweise organische Peroxide, Perester und Hydroperoxide sowie aliphatische Azoverbindungen. Die Auswahl erfolgt so, daß die Zerfallsgeschwindigkeit des Radikalbildners bei der Härtungstemperatur genügend hoch ist. Geeignete Radikalbildner für den Zweck dieser Erfindung sind beispielsweise Di-tert.-butylperoxid, Diisopropylpercarbonat, Cumolhydroperoxid, Azo-bis-isobutyronitril, Azo-bis-cyclobutannitril und Azo-bis-cyanocyclohexan.

Im Falle der Vernetzung mittels UV-Bestrahlung ist es notwendig, den Überzugsmassen vor der Homogenisierung Photoinitiatoren hinzuzufügen. Als Photoinitiatoren sind die üblicherweise eingesetzten Verbindungen geeignet, wie sie z.B. in der Monographie von J. Kosar, "Light-Sensitive Systems", J. Wiley & Sons, New York-London oder in "UV & EB Curing Formulations for Printing Inks, Coatings & Paints", ISBN 0 947798 02 1 oder in der deutschen Offenlegungsschrift 38 15 622 beschrieben werden.

Wenn man sehr glatte Überzüge erzielen will, oder wenn man thermisch empfindliches Material pulverbeschichten will, kann man auch sehr vorteilhaft derart verfahren, daß man zunächst das applizierte Pulver mit einem IR-Strahler oberflächlich aufschmilzt, bis das Material verlaufen ist. In einem zweiten Schritt kann man dann diese Pulverlackschmelze mittels UV-Licht oder mittels Elektronenstrahlen aushärten.

Als Photoinitiatoren sind besonders solche Verbindungen geeignet, die in freier Form vorliegen und pulverisierbar sind. Beispiele hierfür sind 1-Hydroxycyclohexylphenylketon, Benzildimethylketal oder, bei pigmentierten Systemen, 2-Methyl-1-[4-(methylthio)phenyl]-2-morpholino-propanol-1 oder Trimethyl-benzoyldiphenyl-phosphinoxid.

Weiterhin gut geeignet sind Benzoinäther wie Benzoinisopropyläther, Benzilketale, wie z.B. Benzildimethylketal und Hydroxyalkylphenole, wie z.B. 2-Hydroxy-2-methyl-1-phenylpropan-1-on.

Die erwähnten Photoinitiatoren, die je nach Verwendungszweck der erfindungsgemäßen Massen zu 0,1 bis 10 %, vorzugsweise 0,1 bis 5 %, bezogen auf die Masse des Bindemittels eingesetzt werden, können als einzelne Substanz oder, wegen häufiger vorteilhafter synergistischer Effekte, auch in Kombination miteinander verwendet werden.

Erfolgt die Aushärtung mit Hilfe von Elektronenstrahlen, so liegt deren Energie üblicherweise zwischen 50 und 500 keV.

In den folgenden Beispielen sind alle Prozentangaben und Angaben von Teilen als Massengehalte bzw. Massenanteile zu verstehen.

### Beispiel 1

445 Teile Neopentylglykol und 398 Teile Terephthalsäure und 1,5 Teile Dibutylzinnoxid werden am Wasserabscheider auf 190 bis 220 °C erhitzt. Nach vollständiger Auflösung der Terephthalsäure wird auf 160 °C abgekühlt und mit 98 Teilen Maleinsäureanhydrid und 0,2 Teilen Hydrochinon versetzt. Man erhitzt nun wieder langsam auf 195 bis 200 °C und rührt bei dieser Temperatur solange nach, bis eine Säurezahl unter 25 mg KOH/g erreicht ist. Nach Abdestillieren niedermolekularer flüchtiger Oligomere im Vakuum kühlt man ab und erhält einen klaren, festen, ungesättigten Polyester, der eine Säurezahl von 12 mg KOH/g, eine Hydroxylzahl von 106 mg KOH/g und eine zahlenmittlere Molmasse von 2800 g/mol aufweist.

520 Teile dieses Polyesters werden unter Erwärmen und unter Rühren sowie unter Durchleiten von Luft in 71,5 Teilen 2-Hydroxypropylacrylat gelöst und mit 1 g Hydrochinonmonomethyläther sowie mit 0,2 g Dibutylzinndilaurat versetzt. Bei 120 °C werden anschließend binnen 1 h 177 Teile Isophorondiisocyanat zugetropft. Man läßt anschließend solange nachrühren, bis ein Isocyanatgehalt von weniger als 0,3 % erreicht ist und läßt dann die Harzschmelze in eine Wanne ab zum Erstarren. Man erhält ein helles klares festes Harz mit einer OH-Zahl von 10 mg KOH/g, einer Glastemperatur von 46 °C und einer mittleren Molmasse von 8500 g/mol.

465 Teile dieses ungesättigten Polyesterurethanacrylates werden mit 20 Teilen Irgacure® 651 (handelsüblicher Photoinitiator der Firma Ciba-Geigy) und mit 15 Teilen Additol® XL 496 (handeslübliches Verlaufsmittel der Hoechst AG) vermischt, extrudiert und zu einem Pulver mit einer durchschnittlichen Korngröße von 40 µm vermahlen.

Nach Applikation auf gereinigte Eisenbleche werden die Lackfilme mit einem IR-Strahler aufgeschmolzen und anschließend mit einem UV-Strahler (80 W, 10 cm Abstand, 10 m/min) bestrahlt. Man erhält einen lösungsmittelfesten, harten, kratzbeständigen Überzug.

### Beispiel 2

440 Teile Neopentylglykol und 382 Teile Terephthalsäure und 0,5 Teile Dibutylzinnoxid werden am Wasserabscheider auf 190 bis 220 °C erhitzt. Nach vollständiger Auflösung der Terephthalsäure wird auf 160 °C abgekühlt und mit 98 Teilen Maleinsäureanhydrid, 36 Teilen p-tert.-Butylbenzoesäure und 0,1 Teilen Hydrochinon versetzt. Man erhitzt nun wieder langsam auf 195 bis 200 °C und rührt bei dieser Temperatur solange nach, bis eine Säurezahl unter 20 mg KOH/g erreicht ist. Nach Abdestillieren niedermolekularer flüchtiger Oligomere im Vakuum kühlt man ab und erhält einen klaren, festen, ungesättigten Polyester, der eine Säurezahl von 15 mg KOH/g, eine Hydroxylzahl von 110 mg KOH/g und eine zahlenmittlere Molmasse von 2900 g/mol aufweist.

510 Teile dieses Polyesters werden unter Erwärmen und unter Rühren sowie unter Durchleiten von Luft in 72 Teilen 2-Hydroxypropylacrylat gelöst und mit 1 g Hydrochinonmonomethyläther sowie mit 0,2 g Dibutylzinndilaurat versetzt. Bei 120 °C werden anschließend binnen 1 h 180 Teile Isophorondiisocyanat zugetropft. Man lässt anschließend solange nachrühren, bis ein Isocyanatgehalt von unter 0,3 % erreicht ist und läßt dann die Harzschmelze in eine Wanne ab zum Erstarren. Man erhält ein helles klares festes Harz mit einer OH-Zahl von 12 mg KOH/g, einer Glastemperatur von 43 °C und einer mittleren Molmasse von 9900 g/mol.

465 Teile dieses ungesättigten Polyesterurethanacrylates werden mit 20 Teilen Irgacure® 651 (handelsüblicher Photoinitiator der Firma Ciba-Geigy) und mit 15 Teilen Additol® XL 496 (handeslübliches Verlaufsmittel der Hoechst AG) vermischt, extrudiert und zu einem Pulver mit einer durchschnittlichen Korngröße von 40 µm vermahlen.

Nach Applikation auf gereinigte Eisenbleche werden die Lackfilme mit einem IR-Strahler aufgeschmolzen und anschließend mit einem UV-Strahler (80 W, 10 cm Abstand, 10 m/min) bestrahlt. Man erhält einen lösungsmittelfesten, harten, kratzbeständigen Überzug.

## Patentansprüche

1. Verwendung von festen, ungesättigten Polyesterurethanacrylaten mit einer Schmelztemperatur von 35 bis 180 °C als Bindemittel für Pulverlacke, wobei die Polyesterurethanacrylate herstellbar sind durch Umsetzung von einem Polyisocyanat B, einem Hydroxyalkyl-(meth)acrylat C und einem hydroxylgruppenhaltigen, ungesättigten Polyester A, erhältlich durch Kondensation von ungesättigten Dicarbonsäuren, deren Anhydriden, oder einer Mischung von Säuren und Anhydriden, gegebenenfalls zusammen mit gesättigten Carbonsäuren, und mehrwertigen Alkoholen oder Glycidylverbindungen.

2. Verwendung nach Anspruch 1, dadurch gekennzeichnet, daß die Komponente A Hydroxylzahlen von 10 bis 200 mg KOH / g, Säurezahlen von 2 bis 60 mg KOH / g, eine Viskosität von weniger als 100 000 mPa·s, einen Alkengruppen-Massengehalt von 2 bis 20 % und einen Schmelzpunkt von 50 bis 130 °C aufweist.

3. Verwendung nach Anspruch 1, dadurch gekennzeichnet, daß die ungesättigten Polyester (Komponente A) unter Verwendung einer oder mehrerer der ungesättigten Dicarbonsäuren Maleinsäure und Fumarsäure hergestellt werden.

4. Verwendung nach Anspruch 1, dadurch gekennzeichnet, daß die ungesättigten Polyester (Komponente A) unter Verwendung eines oder mehrerer der mehrwertigen Alkohole Neopentylglykol, Äthylenglykol, Diäthylenglykol, Trimethylolpropan und Glycerin hergestellt werden.

5. Verwendung nach Anspruch 1, dadurch gekennzeichnet, daß die ungesättigten Polyester (Komponente A) unter Verwendung einer oder mehrerer der gesättigten Dicarbonsäuren Terephthalsäure und Isophthalsäure hergestellt werden.

6. Verwendung nach Anspruch 1, dadurch gekennzeichnet, daß als Komponente B eines oder mehrere der Polyisocyanate verwendet werden, ausgewählt aus der Gruppe bestehend aus Isophorondiisocyanat, Tetramethylxylylendiisocyanat, Diphenylmethandiisocyanat, Dicyclohexylmethandiisocyanat und Toluylendiisocyanat sowie deren Isocyanatgruppenhaltigen Dimeren (Uretdione) und Trimeren (Isocyanurate).

7. Verwendung nach Anspruch 1, dadurch gekennzeichnet, daß als Komponente C eine oder mehrere der Verbindungen eingesetzt wird aus der Gruppe Hydroxyäthylacrylat, Hydroxypropylacrylat, Hydroxybutylacrylat, Trimethylolpropandiacrylat, Pentaerythrittriacrylat, Hydroxyäthyl(meth)acrylat, Hydroxypropyl(meth)acrylat, Hydroxybutyl(meth)acrylat, Trimethylolpropandi(meth)acrylat, Pentaerythrittri(meth)acrylat, der Umsetzungsprodukte dieser (Meth)Acrylate mit E-Caprolacton und der Umsetzungsprodukte von (Meth)Acrylsäure mit einer Epoxidgruppen-haltigen Verbindung.

8. Verwendung nach Anspruch 1, dadurch gekennzeichnet, daß die Bindemittel zusätzlich einen oder mehrerer Photoinitiatoren enthalten in einer Menge von 0,1 bis 10 %, bezogen auf die Masse des Pulverlacks.

9. Verwendung nach Anspruch 1, wobei die Pulverlacke thermisch oder durch Bestrahlen mit UV-Licht oder Elektronenstrahlen gehärtet werden.

10. Verwendung nach Anspruch 1, wobei die Pulverlacke vor dem Härten durch Bestrahlen mit Infrarotlicht auf dem Substrat aufgeschmolzen werden.

11. Verwendung nach Anspruch 1, wobei die Pulverlacke zum Beschichten von Holz, Glas, Kunststoffen, Metall und Papier eingesetzt werden.

## Claims

1. The use of solid, unsaturated polyesterurethane acrylates having a melting temperature of from 35 to 180°C as binders for powder coatings, it being possible to prepare the polyesterurethane acrylates by reacting a polyisocyanate B, a hydroxyalkyl (meth)acrylate C and a hydroxyl-containing, unsaturated polyester A which is obtainable by condensation of unsaturated dicarboxylic acids, their anhydrides, or a mixture of acids and anhydrides, together if desired with saturated carboxylic acids, and polyhydric alcohols or glycidyl compounds.

2. The use as claimed in claim 1, wherein component A has hydroxyl numbers of from 10 to 200 mg of KOH/g, acid numbers of from 2 to 60 mg of KOH/g, a viscosity of less than 100,000 mPa·s, a content by mass of alkene groups of from 2 to 20 % and a melting point of from 50 to 130°C.

3. The use as claimed in claim 1, wherein the unsaturated polyesters (component A) are prepared using one or more of the unsaturated dicarboxylic acids maleic acid and fumaric acid.

4. The use as claimed in claim 1, wherein the unsaturated polyesters (component A) are prepared using one or more of the polyhydric alcohols neopentylglycol, ethylene glycol, diethylene glycol, trimethylolpropane and glycerol.

5. The use as claimed in claim 1, wherein the unsaturated polyesters (component A) are prepared using one or more of the saturated dicarboxylic acids terephthalic acid and isophthalic acid.

6. The use as claimed in claim 1, wherein, as component B, one or more polyisocyanates selected from the group consisting of isophorone diisocyanate, tetramethylxylylene diisocyanate, diphenylmethane diisocyanate, dicyclohexylmethane diisocyanate and tolylene diisocyanate and the isocyanate-containing dimers (uretdiones) and trimers (isocyanurates) thereof is or are used.

7. The use as claimed in claim 1, wherein, as component C, one or more compounds from the group consisting of hydroxyethyl acrylate, hydroxypropyl acrylate, hydroxybutyl acrylate, trimethylolpropane diacrylate, pentaerythritol triacrylate, hydroxyethyl (meth)acrylate, hydroxypropyl (meth)acrylate, hydroxybutyl (meth)acrylate, trimethylolpropane di(meth)acrylate, pentaerythritol tri(meth)acrylate, the reaction products of these (meth)acrylates with ε-caprolactone and the reaction products of (meth)acrylic acid with an epoxide-containing compound is or are employed.

8. The use as claimed in claim 1, wherein the binders additionally contain one or more photoinitators in a quantity of from 0.1 to 10 %, based on the mass of the powder coating.

9. The use as claimed in claim 1, the powder coatings being cured thermally or by irradiation with UV light or electron beams.

10. The use as claimed in claim 1, the powder coatings being melted prior to curing by irradiation with infrared light on the substrate.

11. The use as claimed in claim 1, the powder coatings being employed for the coating of wood, glass, plastics, metal and paper.

## Revendications

1. Utilisation d'acrylates de polyester uréthannes insaturés solides avec une température de fusion de 35 à 180 °C comme liants pour peintures en poudre, les acrylates de polyester uréthannes pouvant être produits en faisant réagir un polyisocyanate B, un (méth)acrylate d'hydroxyalkyle C et un polyester insaturé contenant des groupes hydroxyle A qui peut être obtenu par condensation d'acides dicarboxyliques insaturés, de leurs anhydrides ou d'un mélange d'acides et d'anhydrides, le cas échéant ensemble avec des acides carboxyliques saturés, et des alcools multivalents ou des composés glycidyliques.

2. Utilisation selon la revendication 1, caractérisée en ce que le composant A présente des indices d'hydroxyle de 10 à 200 mg de KOH/g, des indices d'acide de 2 à 60 mg de KOH/g, une viscosité inférieure à 100 000 MPa·s , une teneur en groupes alcènes de 2 à 20 % en masse et un point de fusion de 50 à 130 °C.

3. Utilisation selon la revendication 1, caractérisée en ce que les polyesters insaturés (composant A) peuvent être obtenus en utilisant un ou plusieurs des acides dicarboxyliques insaturés acide maléique et acide fumarique.

4. Utilisation selon la revendication 1, caractérisée en ce que les polyesters insaturés (composant A) peuvent être obtenus en utilisant un ou plusieurs des alcools multivalents néopentylglycol, éthylène glycol, diéthylène glycol, triméthylolpropane et glycérol.

5. Utilisation selon la revendication 1, caractérisée en ce que les polyesters insaturés (composant A) peuvent être obtenus en utilisant un ou plusieurs des acides dicarboxyliques saturés acide téréphtalique et acide isophtalique.

6. utilisation selon la revendication 1, caractérisée en ce que l'on utilise comme composant B un ou plusieurs des polyisocyanates choisi(s) dans le groupe comprenant le diisocyanate d'isophorone, le diisocyanate de tétraméthylxylylène, le diisocyanate de diphénylméthane, le diisocyanate de dicyclohexylméthane et le diisocyanate de toluylène, ainsi que leurs dimères (urétdiones) et trimères (isocyanurates) contenant des groupes isocyanates.

7. Utilisation selon la revendication 1, caractérisée en ce que l'on utilise comme composant C un ou plusieurs des polyisocyanates choisi(s) dans le groupe comprenant l'acrylate d'hydroxyéthyle, l'acrylate d'hydroxypropyle, l'acrylate d'hydroxybutyle, le diacrylate de triméthylolpropane, le triacrylate de pentaérythritol, le (méth)acrylate d'hydroxyéthyle, le (méth)acrylate d'hydroxypropyle, le (méth)acrylate d'hydroxybutyle, le di(méth)acrylate de triméthylolpropane, le tri(méth)acrylate de pentaérythritol, les produits de la réaction des ces (méth)acrylates avec la s-caprolactone et les produits de la réaction de l'acide (méth)acrylique avec un composé contenant des groupes époxydes.

8. Utilisation selon la revendication 1, caractérisée en ce que les liants contiennent en plus un ou plusieurs amorceurs de photopolymérisation en une quantité de 0,1 à 10 %, ramenée à la masse de la peinture en poudre.

9. Utilisation selon la revendication 1, dans laquelle les peintures en poudre sont durcies thermiquement ou par exposition à de la lumière ultraviolette ou à un faisceau d'électrons.

10. Utilisation selon la revendication 1, dans laquelle les peintures en poudre sont fondues sur le substrat par exposition à un rayonnement infrarouge avant le durcissement.

11. Utilisation selon la revendication 1, dans laquelle les peintures en poudre sont utilisées pour le revêtement de bois, de verre, de plastiques, de métal et de papier.
